# EUROPEAN PATENT SPECIFICATION

(11) **EP 0 560 841 B1**
(45) Date of publication and mention of the grant of the patent: **26.04.1995**
(21) Application number: 92900239.2
(22) Date of filing: 10.12.1991
(51) Int. Cl.: F16C 19/52

(54) **ALARM**
ALARMSYSTEM
SYSTEME D'AVERTISSEMENT

(30) Priority: 12.12.1990 GB 9027013
(43) Date of publication of application: 22.09.1993
(73) Proprietor: HUWOOD INTERNATIONAL LIMITED, Gateshead Tyne & Wear NE11 0LP (GB)
(72) Inventor: RICHMOND, Allan, Westerhope, Newcastle upon Tyne NE5 5JH (GB)
(74) Representative: Szczuka, Jan Tymoteusz
(86) International application number: GB9102188
(87) International publication number: WO9210690

(56) References cited:
- EP-A- 0 161 644
- GB-A- 1 047 190
- GB-A- 2 109 482
- GB-A- 2 204 819
- US-A- 3 401 666
- US-A- 4 148 271

## Description

The present invention relates to an alarm system suitable for use with rollers and other rotary mechanisms having relatively rotatable parts with a bearing therebetween.

The invention relates particularly to a device which gives an indication that a bearing is overheating and thereby gives an early indication of possible bearing failure. When a bearing is contaminated by dirt or moisture and/or is rotated with insufficient lubricant or an excess of lubricant and/or is overloaded, the bearing temperature generally increases progressively until eventually it is well above the normal working temperature of the bearing. Such increases in temperature are generally a symptom of impending bearing collapse or seizure which may cause damage to other components in a machine. Furthermore as a bearing overheats it may reach a temperature whereby it ignites surrounding material and it is therefore highly desirable to obtain early warning of such problems.

Conventional monitoring of rollers bearings by maintenance personnel or by instrumentation has generally been found to be either impractical or prohibitively expensive.

An alarm system according to the first part of claim 1 is known from US-A-3401666.

It is an object of the present invention to avoid or minimise one or more of the above disadvantages.

The present invention provides an alarm system suitable for use in warning of overheating in rotatable bearings comprising first and second bearing portions said alarm system comprising an alarm signal generator means having a thermally activated engagement element provided on a first bearing portion or on a body connected thereto so as to be in thermal connection with said bearing portion and formed and arranged so as to be driven upon reaching a predetermined elevated temperature from a first primed retracted position into a second deployed extended alarm position for producing a distinctive signal
characterised in that said engagement element in its deployed extended alarm position, at least intermittently contacts an engaging portion provided on a second bearing portion or body connected thereto during relative rotation between said first and second bearing portions without substantially preventing continuing relative rotation of said bearing portions, and is formed and arranged so as to produce from its contact with said engagement portion a said distinctive alarm signal, indicating that said bearing has exceeded said predetermined temperature.

It will be appreciated that various forms of alarm signal generator means may be used in accordance with the present invention. Thus there may be used a signal generator means having an engaging portion in the form of one or more generally radially extending projections on said second bearing portion or body connected thereto which is (are) periodically struck by the deployed engagement element as the bearing portions rotate relative to one another, so as to produce a form of more or less audible "clicking" sound, at least one of the engagement element and the projection(s) preferably being resiliently deflectable so as to permit continued alarm signal generation over an extended period of time without damage to the parts. The "clicking" sound could moreover be a more or less loud acoustic signal which could be directly auditorily sensible or via suitable audio transmission, amplification and/or relay means. Alternatively there could be utilised a "clicking" detectable by piezo-electric transducer means or other suitable apparatus for detecting non-audible form alarm signals.

In yet another alternative there could be used an engaging portion in the form of an at least partially circumferentially extending surface which upon frictional contact with the engagement element provides a distinctive screeching or like sound.

Thus with an alarm system of the present invention an alarm signal is given upon overheating of a bearing in use of the system so that said overheating bearing may be readily detected and replaced thereby minimising the risk of fire etc. from continued overheating.

One especially useful application of the present invention is to the rollers of belt conveyors, including both idler and driving rollers, particularly for use in potentially hazardous environs such as underground coal mines and the like. The alarm system of the present invention has many other applications, though, in rotary bearings in machinery used in the petrochemical industry, automobiles, elevators, lifts, machine tools, strips, docks, sugar and grain processing, manufacturing, printing, the gas industry etc.

It will be appreciated that various forms and methods of activating and driving said thermally activated engagement element may be employed. Thus for example a bi-metallic strip, a bi-metallic spring or other combinations of at least two elements of materials having different coefficients of expansion may be used as well as a memory metal, a memory strip or spring or other material having shape memory characteristics, may be used wherein the activation and the driving of said engagement element are integrated into a single component. In another form, the activation and the driving functions of said engagement element may be performed by separate means, for example the driving of the engagement element may be by a pre-stressed resilient biasing means e.g. an helical coil spring, which is retained in place by a low melting point alloy plug, wherein the melting point of said alloy plug corresponds to said predetermined elevated temperature, so that when said plug melts it releases the resilient biasing means so as to drive said engagement member into a deployed alarm position.

The engagement element thermal activation means may be formed and arranged for activation at any suitable temperature, conveniently a temperature in the range from 60° to 110°C, for example at a temperature of about 70°C.

Preferably said distinctive alarm signal is an acoustic signal which may be readily detected by signal monitoring equipment for activation of (conveniently remotely situated) suitable alarm means such as warning bells, sirens, klaxons etc. and/or warning lights such as flashing lamps, l.e.d.s etc.

Desirably said alarm signal is an audible signal which may be readily detected directly by any personnel in the vicinity of equipment equipped with an alarm system of the invention.

It will be understood that bearings in normal use will cause a certain amount of background noise (which may be acoustic in nature and/or in the form of periodic mechanical strain), however, in accordance with the present invention a failed bearing will produce a distinctive warning signal in a generally stepwise increment above any background noise and which thus may be readily detected.

Further preferred features and advantages of the present invention will appear from the following detailed description given by way of example of some preferred embodiments illustrated with reference to the accompanying drawings in which:-
Fig. 1 is a cross section through an idler roller showing a first embodiment of the bearing alarm system (inset) of the invention;
Fig. 2 is similar to Fig. 1 but shows a second embodiment of the alarm system;
Fig. 3 shows a third embodiment of the invention; and
Fig. 4 is a view similar to Figs. 1-3 but shows a fourth embodiment of the bearing alarm system (inset) of the invention.

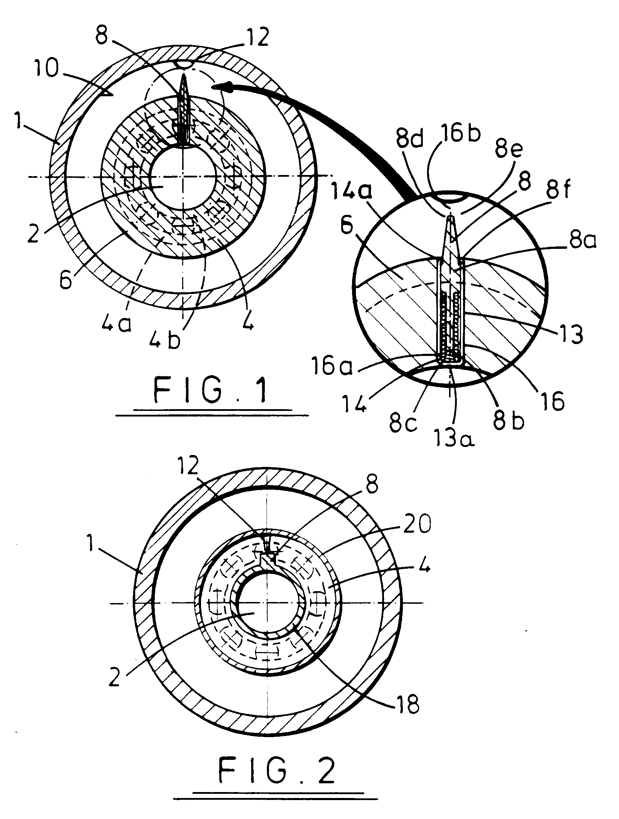

Fig. 1 shows a rotary mechanism in the form of a driveless idler roller generally indicated by reference number 1 such as is used to support the moving belt (not shown) of a belt conveyor. The roller 1 is rotatably mounted on a fixed shaft 2 by rotary bearings 4 having first and second bearing portions 4a, 4b (shown in dashed line). Adjacent the bearing 4 and also mounted on the fixed shaft 2 is a mounting plate 6 which supports a thermally activated engagement element 8 in the form of a pin having a short generally cylindrical body 8a with an elongate spindle 8b at one end 8c and a flexible tapering end portion 8d at its other end 8e which end portion 8d projects outwardly of the borehole 13 and has a maximum diameter slightly less than that of the body 8a so as to form a shoulder 8f at said other end 8e of the body 8a. The engagement element 8 is mounted in close proximity to the bearing 4 so as to be in thermal connection therewith. An internal side wall 10 of the roller 1 has an engagable portion in the form of a protrusion 12 extending radially inwardly from the roller 1.

Under the normal operating conditions of the roller 1, the engagement element 8 is retained in a borehole 13 in the mounting plate 6 by a retaining clip 14 (See inset). In more detail the retaining clip 14 is generally "C"-shaped with opposed free end portions forming jaws 14a which engage the shoulder 8f at opposite sides of the pin 8 to hold the body 8a in the borehole 13. The spindle 8b of the pin 8 has disposed concentrically therearound a memory coil spring 16 having one end 16a engaging spring clip 14 at the base 13a of the borehole 13, and its other end 16b against said one end 8c of the pin body 8a. Should the bearing 4 start to fail heat is generated which is transferred to the engagement element 8. The memory spring 16 is formed and arranged so as to extend to its original size when an elevated temperature indicative of likely bearing failure and/or a likely fire hazard in the immediate environment, is reached. As the spring 16 extends it forces apart the jaws of the retaining clip 14 and drives the engagement element 8 partially out of the stationary plate 6 into contact with the internal side wall 10 of the rotating roller 1 and the protrusion 12, which strikes the engagement element 8 causing an acoustic or audible vibration for detection by detection equipment (not shown) or by operating personnel.

Figs. 2-4 show alternative forms of the alarm system of the invention and will be described with reference to the embodiment in Fig. 1 and indicated by like reference numbers.

In the embodiment of Fig. 2, the fixed shaft 2 has a memory metal ring 18 attached to it which has an engagement element 8 extending therefrom. The outer rotatable portion 20 of the bearing 4 has a protrusion 12 extending radially inwardly therefrom. In normal working conditions the protrusion 12 and the element 8 do not touch, however should the temperature of the bearings 4 increase above a predetermined value due to failure of the bearing 4 the ring 18 expands so as to bring the engagement element 8 into contact with the rotating protrusion 12 so as to generate an acoustic alarm signal by periodic striking of the engagement element 8 against the protrusion.

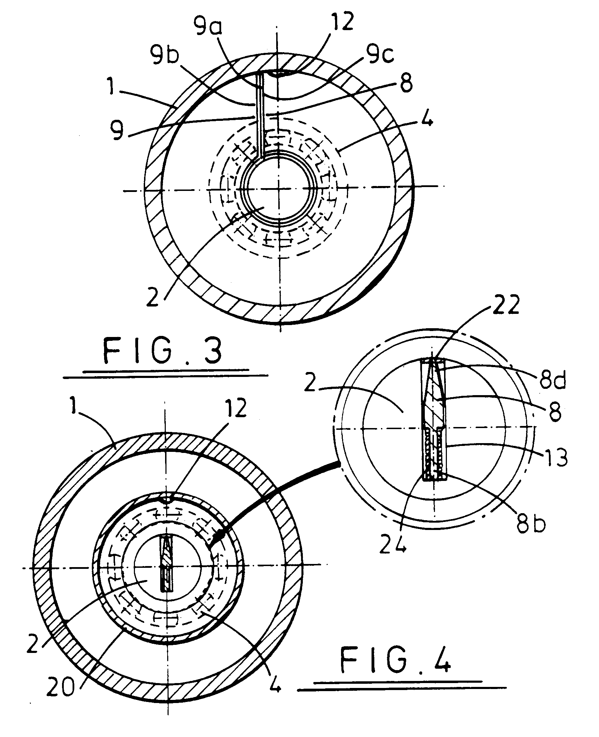

In Fig. 3 the engagement element 8 is in the form of a bi-metallic strip 9 having first and second portions 9a, 9b of first and second materials with different coefficients of expansion, attached to the fixed shaft 2 which when overheated above a predetermined value straightens so as to expand in a radially outward direction into contact with said protrusion 12 thereby causing noise and vibration which may be detected by suitable equipment or operating personnel.

Fig. 4 shows another embodiment of the system wherein the outer part 20 of the bearing 4 has an engagement portion in the form of an inwardly projecting protrusion 12. The engagement element 8 is generally similar to that in the embodiment of Fig. 1 and is mounted inside a generally diametrically extending borehole 13 in the fixed shaft 2 (see inset) and is sealed therein by a fusible metal alloy plug 22. Should the bearing 4 fail and start to overheat, the fusible plug 22, will at a predetermined temperature melt and the engagement element 8 be forced out into contact with the rotating protrusion 12 by a helical spring 24 disposed around the spindle 8b of the engagement element 8 similarly to the arrangement in Fig. 1 albeit in this case the biasing force exerted by the spring 24 will be generally constant during operation of the system. As the bearing rotates the projecting tapering end portion 8d periodically strikes the protrusion so as to generate a noise and vibration that may be detected.

## Claims

1. An alarm system suitable for use in warning of overheating in rotatable bearings (4) comprising first and second bearing portions (4a, 4b), said alarm system comprising an alarm signal generator means (8, 12) having a thermally activated engagement element (8) provided on at least one of a first bearing portion (4a) and a body (2) connected thereto so as to be in thermal connection with said bearing portion (4a) and formed and arranged so as to be driven upon reaching a predetermined elevated temperature from a first primed retracted position into a second deployed extended alarm position for producing a distinctive signal characterised in that said engagement element (8), in its deployed extended alarm position, at least intermittently contacts an engaging portion provided on at least one of a second bearing portion (4b) and a body (1) connected thereto during relative rotation between said first and second bearing portions (4a, 4b) without substantially preventing continuing relative rotation of said bearing portions (4a, 4b), and is formed and arranged so as to produce from its contact with said engagement portion (12), a said distinctive alarm signal, indicating that said bearing (4) has exceeded said predetermined temperature.

2. An alarm system as claimed in claim 1 wherein said thermally activated engagement element (8) is provided with driving means which driving means comprises resilient biasing means (16) formed and arranged for urging the engagement element (8) from said primed position towards said alarm position.

3. An alarm system as claimed in claim 1 or claim 2 wherein said thermally activated engagement element (8) is provided with thermal activation means in the form of a fusible element (22) formed and arranged for retaining said engagement element (8) in said primed position, said fusible element (22) being fusible at said predetermined elevated temperature thereby to release said engagement element (8) so as to be deployed into said alarm position.

4. An alarm system as claimed in claim 1 or claim 2 wherein said thermally activated engagement element (8) is provided with thermal activation means in the form of a latch means of a material having shape memory characteristics formed and arranged for retaining said engagement element (8) in said primed position, and changing its shape at said predetermined elevated temperature so as to deploy or allow deployment of, the element to its alarm position.

5. An alarm system as claimed in claim 1 wherein said thermally activated engagement element (8) comprises a thermally variable configuration member (9) having a first configuration at a normal bearing operating temperature, and a second, significantly different, configuration at and above said predetermined elevated temperature, said member (9) having a distal portion (9a) which is spaced from the engaging portion (12) in said first configuration, and positively contacts said engaging portion (12) in said second configuration.

6. An alarm system as claimed in claim 5 wherein said thermally variable configuration member (9) has a first portion of a material having a first coefficient of expansion joined to a second portion (9c) of a second material having a second, different, coefficient of expansion so that the configuration of said member (9) changes when the temperature thereof traverses said predetermined elevated temperature.

7. An alarm system as claimed in claim 5 or claim 6 wherein said thermally variable configuration member is a bimetallic strip (9).

8. An alarm system as claimed in claim 5 wherein said thermally variable configuration member (16, 18) is of a material having configurational memory characteristics.

9. An alarm system as claimed in claim 8 wherein said thermally activated engagement element (8) is of a plastics material having shape memory characteristics.

10. An alarm system as claimed in any one of claims 1 to 9 wherein said engaging portion is in the form of at least one generally radially extending projection (12) which is periodically struck by the deployed thermally activated engagement element (8), in use of the system, as the bearing portions (4a, 4b) rotate relative to one another so as to provide said distinctive alarm signal.

11. An alarm system as claimed in claim 10 wherein at least one (8d) of said engagement element (8) and said projection (12) is resiliently deflectable upon striking therebetween so as to reduce wear thereof.

12. An alarm system as claimed in any one of claims 1 to 9 wherein said engaging portion is in the form of an at least partially circumferentially extending surface which upon frictional contact with said engagement element provides a distinctive screeching or like sound.

13. An alarm system as claimed in claim 1 which includes apparatus for detection, transmission, amplification and/or relay by electronic means, of said distinctive alarm signal in use of the alarm systems.

14. An alarm system as claimed in claims 2 and 3 wherein said engagement element comprises a pin means (8) mounted in a borehole (13) with a resilient biasing means in the form of an axially compressible spring (24) disposed in the borehole (13) for acting between the borehole (13) and the pin means (8) so as to urge the pin means (8) in a direction outwardly of the borehole (13), so that, upon release of the pin means (8) by fusing of the fusible link (22), a flexible distal end portion (8d) of the pin means (8) projects outwardly of the borehole (13) for periodic striking engagement with an engaging portion in the form of a generally radially extending projection (12), thereby to produce a said distinctive alarm signal.

15. An endless conveyor having a plurality of drive and/or idler rollers (1), said rollers being provided with alarm systems according to any one of the preceding claims.

## Patentansprüche

1. Alarmsystem, das zur Verwendung als Überhitzungswarnsystem in Drehlagern (4), die einen ersten und einen zweiten Lagerabschnitt (4a, 4b) aufweisen, geeignet ist, wobei dieses Alarmsystem ein Alarmsignal-Erzeugermittel (8, 12), das ein thermisch aktiviertes Eingrlffselement (8) hat, das an wenigstens einem eines ersten Lagerabschnitts (4a) vorhanden ist, und einen damit verbundenen Körper (2) aufweist, so daß eine Wärmeverbindung mit diesem Lagerabschnitt (4a) vorhanden ist, und das so geformt und angeordnet ist, daß es nach Erreichen einer festgelegten erhöhten Temperatur aus einer ersten, zurückgezogenen Anfangsposition in eine zweite, entfaltete Alarmposition getrieben wird, um ein distinktives Alarmsignal zu erzeugen, dadurch gekennzeichnet, daß das Eingriffselement (8) in seiner entfalteten Alarmposition zumindest stoßweise einen Eingriffsabschnitt, der auf wenigstens einem eines zweiten Lagerabschnitts (4b) gebildet wird, und einen damit verbundenen Körper (1) während der relativen Drehung zwischen dem ersten und dem zweiten Lagerabschnitt (4a, 4b) berührt, ohne im wesentlichen die fortgesetzte relative Drehung dieser Lagerabschnitte (4a, 4b) zu behindern, und daß es so geformt und angeordnet ist, daß es auf Grund seines Kontaktes mit dem Eingriffsabschnitt (12) das distinktive Alarmsignal erzeugt, das signalisiert, daß das Lager (4) die festgelegte Temperatur überschritten hat.

2. Alarmsystem nach Anspruch 1, bei dem das thermisch aktivierte Eingriffselement (8) mit einem Antriebsmittel versehen ist, wobei dieses Antriebsmittel ein elastisches Vorbelastungsmittel (16) aufweist, das so geformt und angeordnet ist, daß es das Eingriffselement (8) aus der Anfangsposition in die Alarmposition drängt.

3. Alarmsystem nach Anspruch 1 oder Anspruch 2, bei dem das thermisch aktivierte Eingriffselement (8) mit einem thermischen Aktivierungsmittel in Form eines Schmelzelementes (22) versehen ist, das so geformt und angeordnet ist, daß es das Eingriffselement (8) in der Ausgangsposition hält, wobei das Schmelzelement (22) bei der festgelegten erhöhten Temperatur leicht schmelzbar ist, um so das Eingriffselement (8) freizugeben, so daß es in die Alarmposition entfaltet werden kann.

4. Alarmsystem nach Anspruch 1 oder Anspruch 2, bei dem das thermisch aktivierte Eingriffselement (8) mit einem thermischen Aktivierungsmittel in Form eines Klinkenmittels aus einem Material, das die Eigenschaften des Gedächtniseffektes hat, versehen ist, das so geformt und angeordnet ist, daß es das Eingriffselement (8) in der Ausgangsposition hält, und das bei der festgelegten erhöhten Temperatur seine Form ändert, um das Element in seine Alarmposition zu entfalten oder dessen Entfaltung in diese Position zu erlauben.

5. Alarmsystem nach Anspruch 1, bei dem das thermisch aktivierte Eingriffselement (8) ein thermisch variables Konfigurationsglied (9) aufweist, das bei normaler Betriebstemperatur des Lagers eine erste Konfiguration und bei und über der festgelegten erhöhten Temperatur eine zweite, signifikant verschiedene Konfiguration hat, wobei das Glied (9) einen Distalabschnitt (9a) hat, der in der ersten Konfiguration vom Eingriffsabschnitt (12) entfernt ist und diesen Eingriffsabschnitt (12) in der zweiten Konfiguration positiv kontaktiert.

6. Alarmsystem nach Anspruch 5, bei dem das thermisch variable Konfigurationsglied (9) einen ersten Abschnitt aus einem Material mit einem ersten Ausdehnungskoeffizienten hat, der mit einem zweiten Abschnitt (9c) aus einem zweiten Material verbunden ist, das einen zweiten, unterschiedlichen Ausdehnungskoeffizienten hat, so daß sich die Konfiguration des Gliedes (9) ändert, wenn dessen Temperatur die festgelegte erhöhte Temperatur überschreitet.

7. Alarmsystem nach Anspruch 5 oder Anspruch 6, bei dem das thermisch variable Konfigurationsglied ein Bimetallstreifen (9) ist.

8. Alarmsystem nach Anspruch 5, bei dem das thermisch variable Konfigurationsglied (16, 18) aus einem Material besteht, das die Eigenschaften des Konfigurationsgedachtnisses hat.

9. Alarmsystem nach Anspruch 8, bei dem das thermisch aktivierte Eingriffselement (8) aus einem Plastikmaterial besteht, das die Eigenschaften des Gedächtniseffektes hat.

10. Alarmsystem nach einem der Ansprüche 1 bis 9, bei dem der Eingriffsabschnitt die Form von wenigstens einem allgemein radial vorstehenden Vorsprung (12) hat, auf den, bei der Nutzung des Systems, wenn die Lagerabschnitte (4a, 4b) im Verhältnis zueinander rotieren, regelmäßig das entfaltete thermisch aktivierte Eingriffselement (8) auftrifft, um so das distinktive Alarmsignal zu erzeugen.

11. Alarmsystem nach Anspruch 10, bei dem wenigstens eines (8d) des Eingriffselements (8) und des Vorsprungs (12) beim Auftreffen zwischen diesen elastisch ablenkbar ist, um so deren Verschleiß zu senken.

12. Alarmsystem nach einem der Ansprüche 1 bis 9, bei dem der Eingriffsabschnitt die Form von wenigstens einer sich teilweise über den Umfang erstreckenden Fläche hat, die beim Reibungskontakt mit dem Eingriffselement einen distinktiven Kreisch- oder ähnlichen Ton erzeugt.

13. Alarmsystem nach Anspruch 1, das eine Vorrichtung zum Feststellen, Übertragen, Verstärken und/oder zur Weiterleitung durch elektronische Mittel des distinktiven Alarmsignals bei der Nutzung der Alarmsysteme einschließt.

14. Alarmsystem nach Anspruch 2 oder 3, bei dem das Eingriffselement einen Stift (8) aufweist, der in einer Bohrung (13) mit einem elastischen Vorbelastungsmittel befestigt ist, das die Form einer axial zusammenpreßbaren Feder (24) hat, die sich in der Bohrung (13) befindet, um zwischen der Bohrung (13) und dem Stift (8) zu wirken, um den Stift (8) in einer Richtung aus der Bohrung (13) hinaus zu drängen, so daß nach Freigabe des Stiftes (8) durch das Abschmelzen eines Schmelzgliedes (22) ein flexibler Distalendabschnitt (8d) des Stiftes (8) nach außen aus der Bohrung (13) vorsteht, um regelmäßig auf einen Eingriffsabschnitt in Form eines allgemein radial verlaufenden Vorsprungs (12) aufzuschlagen, um so das distinktive Alarmsignal zu erzeugen.

15. Ein Endlosförderer mit einer Vielzahl von Antriebs- und/oder Leitrollen (1), wobei diese Rollen mit Alarmsystemen nach einem der vorstehenden Ansprüche ausgestattet sind.

## Revendications

1. Système d'alarme servant d'avertissement en cas d'une surchauffe dans des roulements rotatifs (4) comprenant des premières et deuxièmes parties de roulement (4a, 4b), ledit système d'alarme comprenant un moyen générateur d'un signal d'alarme (8, 12) comportant un élément d'engagement à activation thermique (8), agencé sur au moins une d'une première partie de roulement (4a), et un corps (2) qui y est connecté de sorte à être connecté thermiquement à ladite partie de roulement (4a), formé et agencé de sorte à être entraîné lors de l'atteinte d'une température élevée prédéterminée, d'une première position de retrait d'origine vers une deuxième position d'alarme étendue déployée, pour produire un signal distinctif, caractérisé en ce que ledit élément d'engagement (8), dans sa position d'alarme étendue déployée, contacte au moins par intermittence une partie d'engagement agencée sur au moins une d'une deuxième partie de roulement (4b) et un corps (1) qui y est connecté au cours de la rotation relative entre lesdites premières et deuxièmes parties de roulement (4a, 4b), sans empêcher pratiquement la poursuite de la rotation relative desdites parties de roulement (4a, 4b), et en ce qu'il est formé et agencé de sorte à produire par suite de son contact avec ladite partie d'engagement (12) un dit signal d'alarme distinctif, indiquant que la température dudit roulement (4) a dépassé ladite température prédéterminée.

2. Système d'alarme selon la revendication 1, dans lequel ledit élément d'engagement à activation thermique (8) comporte un moyen de commande, ce moyen de commande comprenant un moyen poussoir élastique (16), formé et agencé de sorte à pousser l'élément d'engagement (8) de ladite position d'origine vers ladite position d'alarme.

3. Système d'alarme selon les revendications 1 ou 2, dans lequel ledit élément d'engagement à activation thermique (8) comporte un moyen d'activation thermique sous forme d'un élément fusible (22), formé et agencé de sorte à retenir ledit élément d'engagement (8) dans ladite position d'origine, ledit élément fusible (22) étant fusible en présence de ladite température élevée prédéterminée, pour relâcher ainsi ledit élément d'engagement (8) pour le déployer dans ladite position d'alarme.

4. Système d'alarme selon les revendications 1 ou 2, dans lequel ledit élément d'engagement à activation thermique (8) comporte un moyen d'activation thermique sous forme d'un moyen de verrouillage composé d'un matériau ayant des caractéristiques de mémoire de forme, formé et agencé de sorte à retenir ledit élément d'engagement (8) dans ladite position d'origine, et changeant sa forme en présence de ladite température élevée prédéterminée, de sorte à déployer ou à permettre le déploiement de l'élément vers sa position d'alarme.

5. Système d'alarme selon la revendication 1, dans lequel ledit élément d'engagement à activation thermique (8) comprend un élément de configuration à variation thermique (9), ayant une première configuration en présence d'une température de service normale du roulement, et une deuxième configuration, notablement différente, en présence de ladite température élevée prédéterminée et en présence de températures supérieures à celle-ci, ledit élément (9) comportant une partie distale (9a) espacée de la partie d'engagement (12) dans ladite première configuration et contactant positivement ladite partie d'engagement (12) dans ladite deuxième configuration.

6. Système d'alarme selon la revendication 5, dans lequel ledit élément de configuration à variation thermique (9) comporte une première partie, composée d'un matériau ayant un premier coefficient d'expansion, assemblée à une deuxième partie (9c), composée d'un deuxième matériau ayant un deuxième coefficient d'expansion différent, de sorte que la configuration dudit élément (9) change lorsque sa température traverse ladite température élevée prédéterminée.

7. Système d'alarme selon les revendications 5 ou 6, dans lequel ledit élément de configuration à variation thermique est une bilame (9).

8. Système d'alarme selon la revendication 5, dans lequel ledit élément de configuration à variation thermique (16, 18) est composé d'un matériau ayant des caractéristiques à mémoire de configuration.

9. Système d'alarme selon la revendication 8, dans lequel ledit élément d'engagement à activation thermique (8) est composé d'une matière plastique ayant des caractéristiques à mémoire de forme.

10. Système d'alarme selon l'une quelconque des revendications 1 à 9, dans lequel ladite partie d'engagement a la forme d'au moins une saillie à extension généralement radiale (12), qui est périodiquement heurtée par l'élément d'engagement à activation thermique déployé (8), lors de l'utilisation du système, pendant la rotation relative des parties de roulement (4a, 4b), de sorte à produire ledit signal d'alarme distinctif.

11. Système d'alarme selon la revendication 10, dans lequel au moins un (8d) dudit élément d'engagement (8) et de ladite saillie (12) peut étre fléchi élastiquement lors du heurt entre eux, de sorte à réduire l'usure correspondante.

12. Système d'alarme selon l'une quelconque des revendications 1 à 9, dans lequel ladite partie d'engagement a la forme d'une surface s'étendant au moins en partie sur la circonférence, produisant, lors du contact par frottement avec ledit élément d'engagement, un son perçant distinctif ou un son similaire.

13. Système d'alarme selon la revendication 1, englobant un appareil servant à la détection, à la transmission, à l'amplification et/ou la retransmission, par l'intermédiaire d'un moyen électronique, dudit signal d'alarme distinctif lors de l'utilisation du système d'alarme.

14. Système d'alarme selon les revendications 2 et 3, dans lequel ledit élément d'engagement comprend un moyen de broche (8) montée dans un trou foré (13), un moyen poussoir élastique sous forme d'un ressort à compression axiale (24) étant agencé dans le trou foré (13), pour agir entre le trou foré (13) et le moyen de broche (8), afin de pousser le moyen de broche (8) dans une direction allant vers l'extérieur du trou foré (13), de sorte que, lors du relâchement du moyen de broche (8) par suite de la fusion du joint fusible (22), une partie d'extrémité distale flexible (8d) du moyen de broche (8) déborde vers l'extérieur du trou foré (13) en vue d'un engagement par heurt périodique avec une partie d'engagement sous forme d'une saillie à extension généralement radiale (12), pour produire ainsi un dit signal d'alarme distinctif.

15. Transporteur à bande sans fin comportant plusieurs rouleaux d'entraînement et/ou rouleaux libres (1), lesdits rouleaux comportant un système d'alarme selon l'une quelconque des revendications précédentes.
